Europäisches Patentamt

European Patent Office

Office européen des brevets

(19)

(11) Numéro de publication: **0 250 320 B1**

## (12) FASCICULE DE BREVET EUROPEEN

(45) Date de publication de fascicule du brevet: **19.08.92**   (51) Int. Cl.5: **H02J 3/14**

(21) Numéro de dépôt: **87401362.6**

(22) Date de dépôt: **17.06.87**

(54) **Adaptateur de puissance pour installations électriques, notamment domestiques, à commande dite par courants porteurs.**

(30) Priorité: **20.06.86 FR 8608914**

(43) Date de publication de la demande:
**23.12.87 Bulletin 87/52**

(45) Mention de la délivrance du brevet:
**19.08.92 Bulletin 92/34**

(84) Etats contractants désignés:
**AT BE CH DE ES FR GB IT LI LU NL SE**

(56) Documents cités:
| | |
|---|---|
| EP-A- 0 023 254 | EP-A- 0 028 882 |
| EP-A- 0 093 882 | EP-A- 0 129 752 |
| WO-A-82/03299 | DE-A- 3 031 163 |
| DE-A- 3 113 015 | US-A- 4 360 881 |
| US-A- 4 510 398 | |

(73) Titulaire: **MANUFACTURE D'APPAREILLAGE ELECTRIOUE DE CAHORS**
**B.P.149 Regourd**
**F-46003 Cahors Cédex(FR)**

Titulaire: **ELECTRICITE DE FRANCE**
**32 Boulevard Lascrosses**
**F-31002 Toulouse(FR)**

(72) Inventeur: **Tougne Daniel**
**15 Boulevard Gambetta**
**FR-46000 Cahors(FR)**
Inventeur: **Feron Paul**
**29 rue A.Delieux**
**FR-31400 Toulouse(FR)**

(74) Mandataire: **Bouju, André et al**
**Cabinet Bouju Derambure (Bugnion) S.A.**
**B.P. 6250**
**F-75818 Paris Cédex 17(FR)**

Rank Xerox (UK) Business Services

## Description

La présente invention concerne un adaptateur de puissance pour installations électriques, notamment domestiques, à commande dite "par courants porteurs".

Comme l'on sait, les tarifs d'abonnement pratiqués par les organismes de distribution d'électricité croissent avec la puissance maximale souscrite. Compte tenu de cela, on a proposé des appareils appelés "délesteurs", qui présentent une entrée reliée à la sortie du disjoncteur général, et plusieurs sorties reliées chacune à un ou plusieurs points de consommation. Lorsque la puissance consommée dépasse un certain seuil légèrement inférieur à la puissance souscrite, le délesteur débranche automatiquement ces sorties en cascade selon un ordre de priorité prédéterminé, jusqu'à ce que la puissance consommée redevienne conforme à l'abonnement. Certains appareils permettent à l'utilisateur de programmer le niveau de priorité des sorties, c'est-à-dire l'ordre dans lequel elles sont débranchées en cas de dépassement du seuil.

Il existe d'autre part des systèmes de tarification selon lesquels la valeur du kWh varie dans le temps. Il existe ainsi la tarification réduite la nuit. Il existe également le système du tarif réduit toute l'année sauf pendant quelques jours dits "de pointe" où le tarif est particulièrement élevé. Selon ce dernier système, un signal avertisseur est envoyé sur le réseau un certain temps avant l'entrée en vigueur du tarif élevé, pour inviter l'usager à modérer sa consommation. Un second signal est ensuite envoyé pour commuter le compteur sur le nouveau tarif.

La demande de brevet français n° 85 10 327 du 5 Juillet 1985 (cette demande peut être consultée dans le dossier correspondant à la demande européenne publiée sous le numéro 0 208 597) dont la Demanderesse est copropriétaire décrit ainsi un dispositif adaptateur de puissance qui permet à l'usager à la fois de respecter une puissance maximale modérée et d'optimiser sa consommation d'énergie en fonction du tarif en vigueur.

Selon la demande de brevet précitée, l'adaptateur de puissance comprend une entrée de puissance, plusieurs sorties de puissance et un dispositif délesteur capable, lorsque la puissance consommée dépasse un certain seuil, de débrancher en cascade selon un ordre préétabli certaines au moins des sorties de puissance jusqu'à ce que le seuil soit respecté, et pour rétablir ensuite le branchement des sorties dans l ordre inverse. Il comprend en outre des moyens permettant d'affecter sélectivement une autorisation d'effacement a certaines au moins des sorties de puissance indépendamment de l'ordre préétabli précité, et des moyens d'effacement sensibles à un signal représentatif du coût de l'énergie pour débrancher les sorties affectées d'une autorisation d'effacement, lorsque le coût de l'énergie est élevé.

D'après la demande de brevet n° 85 10 327, l'exécution des ordres de délestage sur les consommateurs non prioritaires s'effectue directement au niveau de l'adaptateur de puissance. La mise en place d'un tel adaptateur dans une installation domestique existante nécessite donc que les départs des lignes d'alimentation des appareils délestables, c'est-à-dire non prioritaires, soient disponibles de manière distincte, par exemple sur un tableau de répartition, de façon à pouvoir être raccordés facilement aux sorties de l'adaptateur tout en évitant une refonte complète du réseau électrique de l'installation.

Or la plupart des installations électriques domestiques n'est pas équipée d'un tel tableau de répartition, une seule et même ligne d'alimentation partant du disjoncteur pour alimenter en parallèle plusieurs appareils. La mise en place d'un adaptateur de puissance du genre précité dans ce type d'installation impose donc une refonte quasi-totale du réseau électrique qui s'avère le plus souvent coûteuse.

On connaît d'après le brevet américain US-A-4 510 398 un système de délestage destiné à maintenir la consommation de puissance d'un immeuble en-dessous d'un seuil prédéterminé. Il prévoit plusieurs traitements de priorité entre charges et des programmes séquentiels, avec en particulier, la possibilité d'un ordre de délestage préétabli, suivi d'un rétablissement en sens inverse. Ce système nécessite la mise en place de lignes et tableaux de commande spécifiques.

Le brevet européen EP-A-023 254 décrit un dispositif de contrôle de la distribution de puissance d'une centrale électrique. Il enseigne l'utilisation d'un signal d'impulsions codées injectées sur la ligne de puissance et le préréglage d'unités de réception à distance pour répondre aux signaux d'impulsions codées émis par des unités de sous-station. Il décrit en outre des fonctions de commande destinées à gérer les priorités entre charges, soit automatiquement, soit manuellement, soit sur une base de cycles fixes ou dynamiques.

On peut également associer le système du EP-A-023 254 à un dispositif récepteur d'impulsions codées installé chez un consommateur tel que celui décrit dans le EP-A-0 129 752. Le système agit sur des points de consommation pris chacun séparément, en mettant en jeu une fréquence porteuse transitant par le circuit de puissance et parvenant à un récepteur, lequel actionne une commande du point de consommation. Normalement, le consommateur n'a pas accès au réglage des priorités de délestage d'un tel dispositif récepteur qui du reste est habituellement plombé. La commande par fréquence porteuse a justement, pour les régies de distribution d'électricité, l'avantage d'une grande inviolabilité.

Lorsqu'un système de ce type est mis en oeuvre, il en résulte un inconvénient manifeste et important, à savoir la possibilité pour le service de distribution de débrancher autoritairement un point de consommation chez l'utilisateur, sans que celui-ci puisse s'y opposer quels que soient ses besoins au moment du débranchement. C'est pourquoi ces systèmes, bien que faisant l'objet d'une littérature assez fournie, n'ont pas ou que peu d'applications en pratique.

Le but de la présente invention est de proposer un adaptateur de puissance qui offre une grande souplesse d'utilisation et notamment de programmation, et qui puisse être intégré dans une installation existante sans travaux de câblage important.

Ainsi, l'adaptateur de puissance visé par l'invention, notamment pour installations électriques domestiques comportant plusieurs points de consommation d'électricité, comprend des moyens de détection de la puissance consommée, et des moyens de coupure sélective capables, lorsque la puissance électrique consommée par l'ensemble desdits points dépasse un certain seuil, de couper en cascade selon un ordre préétabli l'alimentation de certains au moins des points de consommation d'électricité jusqu'à ce que le seuil soit respecté, et de rétablir ensuite l'alimentation de ces points dans l'ordre inverse, les moyens de coupure sélective comprenant des moyens de programmation de l'ordre préétabli et un circuit émetteur pour délivrer des signaux de commande auxquels sont sensibles de manière sélective des dispositifs récepteurs pour couper ou rétablir l'alimentation desdits points de consommation électrique, ces dispositifs récepteurs étant reliés en série avec lesdits points et en amont de ceux-ci.

Suivant l'invention, l'adaptateur de puissance est caractérisé en ce qu'il comprend une entrée de puissance et une sortie de puissance reliée aux points de consommation d'électricité, et en ce que le circuit émetteur délivre les signaux de commande sur la sortie de puissance de l'adaptateur, les dispositifs récepteurs étant sensibles de manière sélective aux signaux de commande superposés au courant de puissance destiné aux points de consommation.

Ainsi, l'adaptateur conforme à l'invention ne présente qu'une seule sortie de puissance par laquelle transitent les ordres de délestage et relestage sur les consommateurs non prioritaires. Il n'y a pas de câblage spécifique à la transmission de ces ordres, de sorte qu'il est très facile d'incorporer un tel appareil dans une installation électrique domestique existante. Par ailleurs, les dispositifs récepteurs sont également de mise en place simple et on peut envisager de ne les utiliser que de manière momentanée, par exemple en fonction des conditions climatiques. L'adaptateur de puissance conforme à l'invention est donc d'une mise en oeuvre souple et rapide.

D'autres particularités et avantages de l'invention ressortiront encore de la description ci-après.

Aux dessins annexés, donnés à titre d'exemple non limitatif :

- la figure 1 est une vue schématique d'une installation électrique domestique utilisant un adaptateur de puissance suivant la demande de brevet français n °85 10 327 ;
- la figure 2 est un schéma bloc de cet adaptateur ;
- la figure 3 est une vue schématique d'une installation électrique domestique utilisant un adaptateur de puissance selon l'invention ;
- la figure 4 est un schéma bloc de cet adaptateur ;
- La figure 5 est un schéma bloc du circuit émetteur de cet adaptateur ; et
- la figure 6 est un schéma block d'un dispositif récepteur selon l'invention.

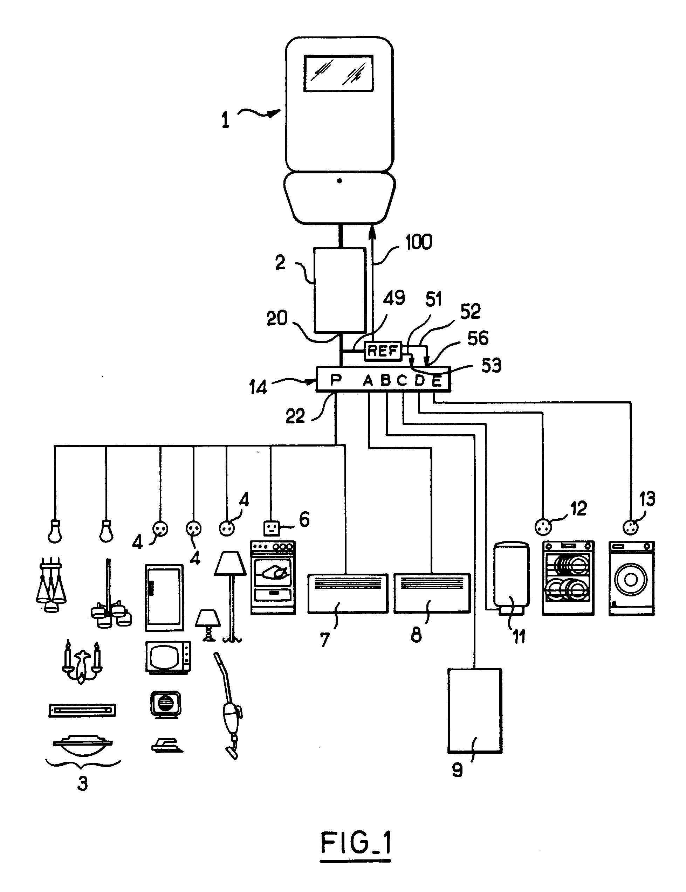

L'exemple qui va être décrit concerne une installation domestique monophasée. Elle comprend (figure 1) un compteur 1 qui est relié par l'intermédiaire d'un disjoncteur différentiel 2 à différents points de consommation, à savoir des points d'éclairage 3, des prises faible intensité 4, une prise pour cuisinière 6, un ou plusieurs appareils de chauffage électriques 7 dans des pièces occupées le jour, un ou plusieurs appareils de chauffage 8 dans des pièces occupées la nuit, un appareil de chaufage d'appoint 9, à combustion initiée par allumage électrique, un chauffe-eau 11, une prise 12 pour un lave-vaisselle et une prise 13 pour un lave-linge.

Entre le disjoncteur différentiel 2 et l'ensemble de ces appareils est interposé l'adaptateur de puissance 14 selon la demande de brevet français n ° 85 10 327.

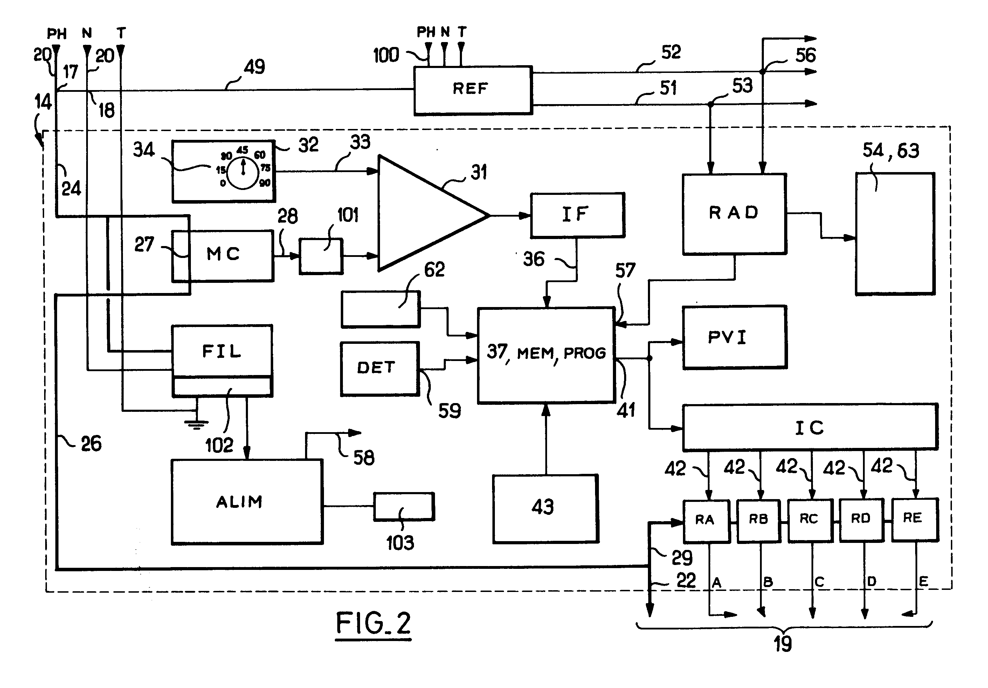

Comme le montre la figure 2, l'adaptateur 14 comprend une borne de phase 17 et une borne de neutre 18 qui sont reliées à des bornes de sortie du disjoncteur différentiel 2 par une liaison bifilaire 20 (figure 1).

L'adaptateur 14 comprend en outre un bornier départ 19 comprenant six bornes de phase désignées respectivement par 22 et par A, B, C, D, E.

La borne de phase 22 dite "prioritaire",est en court-circuit permanent avec la borne de phase d'entrée 17, par l'intermédiaire de conducteurs 24, 26 reliés l'un à l'autre par un trajet conducteur 27 à travers un dispositif de mesure de courant MC dont le rôle apparaîtra plus loin.

Comme le montre la figure 1, la borne de sortie prioritaire 22 est raccordée aux points de consommation 3, 4, 6 et 7 détaillés plus haut car il est reconnu que l'alimentation de ces points ne peut être interrompue sans gêne importante.

Les sorties A, B, C, raccordées dans l'exemple au chauffage des pièces occupées la nuit, au chauffage d'appoint et au chauffe-eau, sont dites non prioritaires. Les sorties D et E, raccordées dans l'exemple au lave-vaisselle 12 et au lave-linge 13 repectivement sont dites semi-prioritaires. L'alimentation de ces différentes sorties A à E, peut être interrompue par des relais (ou des dispositifs équivalents du type triac) respectifs RA, RB, RC, RD, RE (figure 2), dans des conditions que l'on va décrire ci-après.

L'alimentation des sorties non prioritaires A, B, C peut être interrompue lorsque le courant consommé par l'installation dépasse un certain seuil.

A cet effet, le dispositif de mesure de courant MC (figure 2) fournit sur sa sortie 28 un potentiel qui est fonction du courant dans le trajet 27 lequel est situé en amont d'une ramification 29 reliant la ligne 26 aux sorties A, B, C, D, E à travers l'étage de puissance des relais RA, RB, RC, RD, RE. Le courant dans le trajet 27 est donc le courant total consommé par l'installation. La sortie 28 du dispositif de mesure MC est reliée par l'intermédiaire d'un filtre 101, à l'une des entrées d'un comparateur 31 dont l'autre entrée est raccordée à la sortie 33 d'un dispositif de consigne 32. Le potentiel présent sur la sortie 33 du dispositif 32 est fonction de la position d'un sélecteur rotatif 34 accessible de l'extérieur de l'appareil 14. Le sélecteur 34 est déplaçable par rapport à une échelle graduée en ampères. En service, le repère du sélecteur 34 est placé en face de la valeur en ampères ou en watts correspondant au contrat souscrit.

Sur sa sortie, le comparateur 31 fournit un signal binaire qui prend l'un des niveaux 0 ou 1 lorsque le courant mesuré dans le trajet 27 est inférieur à un seuil lui-même légèrement inférieur au courant maximal souscrit par l'abonné, et prend l'autre niveau lorsque le courant mesuré dans le trajet 27 est supérieur à ce seuil.

La sortie du comparateur 31 est raccordée à une entrée 36 d'un microprocesseur 37 par l'intermédiaire d'un interface IF d'adaptation de signal.

Le microprocesseur 37 fonctionne en liaison avec une mémoire MEM et un programmateur PROG. Le microprocessur 37 a une sortie 41 vers un périphérique de visualisation PVI et vers un interface de commande IC ayant une sortie 42 vers chacun des relais RA, RB, RC, RD, RE.

Le programmateur PROG est accessible à l'utilisateur par l'intermédiaire d'un clavier 43. Par le clavier 43, l'utilisateur peut définir l'ordre dans lequel les sorties non prioritaires A, B, C doivent être débranchées lorsque le courant dans le trajet 27 dépasse le seuil.

L'alimentation des sorties non prioritaires A, B, C et celle des sorties semi-prioritaires D, E peut être interrompue pendant des périodes où le tarif de l'énergie est élevé. Dans l'exemple décrit, l'installation comprend un relais REF ayant une entrée 49 branchée sur la phase en amont de la borne 17, une sortie 51 dite de préavis et une sortie 52 de commande de changement de tarif. Le relais REF est également relié au compteur 1 par une liaison 100 (figures 1 et 2) pour commuter celui-ci en fonction du tarif en vigueur. Le relais REF est sensible à divers signaux véhiculés par le réseau et dont la fréquence est différente de la fréquence de distribution. En réponse à un premier signal, dit "de préavis", la sortie 51 du relais REF est activée. En réponse à un second signal ou s ignal de changement de tarif, c'est la sortie 52 du relais REF qui est activée. La sortie 51 est branchée sur une borne de préavis 53 de l'appareil 14. La sortie 52 est reliée à une borne 56 de l'adaptateur 14. Dans l'appareil 14, les bornes 53 et 56 sont raccordées à une entrée 57 du microprocesseur 37 par l'intermédiaire d'un relais d'adaptation RAD qui, en fonction de l'état des sorties 51 et 52, fournit sur l'entrée 57 du microprocesseur un signal binaire acceptable par ce dernier. Par exemple, sur réception du signal de passage en tarif élevé, le relais REF fait passer sa sortie 52 à l'état activé, et ce jusqu'à ce qu'un autre type de signal soit reçu sur l'entrée 49 du relais REF pour signifier la remise en vigueur du tarif réduit. L'état de l'entrée 57 du microprocesseur est donc fonction du tarif en vigueur. Le relais RAD commande en outre l'allumage d'un voyant lumineux 54 quand la sortie 51 est activée.

Selon des modalités qui sont clairement exposées dans la demande de brevet précitée, l'utilisateur a au préalable défini à l'aide du programmateur PROG une ou plusieurs des sorties A, B, C, D, E qu'il désire débrancher lorsque le tarif est élevé. En fonction de cette programmation et du signal sur son entrée 57, le microprocesseur 37 commande l'ouverture des relais associés à ces sorties lorsque le tarif est élevé.

Un bloc d'alimentation ALIM commandé par un interrupteur marche-arrêt 103, prélève de l'énergie sur la ligne 24 par l'intermédiaire d'un filtre FIL et d'un fusible 102. Le bloc ALIM dessert sous 10 ou 22 volts tous les organes consommateurs de l'appareil 14. Pour ne pas charger la figure, les liaisons correspondantes ont été symbolisées par la flèche 58. Le bloc ALIM comprend un transformateur et un redresseur fonctionnant à partir de l'énergie prélevée sur le réseau, et un accumulateur alimentant la sortie 58 en cas de coupure de courant sur le réseau. Le bloc ALIM comprend des moyens pour charger l'accumulateur en tant que de besoin à partir du réseau lorsque celui-ci fournit du courant. Un détecteur DET fournit sur sa sortie 59 un signal à deux niveaux selon qu'il y a - ou non - du courant sur le réseau. Ce signal binaire est fourni à une entrée du microprocesseur 37. Lorsque d'après l'état de cette entrée, le microprocesseur 37 constate une coupure de courant sur le réseau, il commande un fonctionnement en mode minimum, selon lequel seule la mémoire MEM est alimentée. Ainsi, la consommation de l'appareil 14 sera minimale et par conséquent le contenu de la mémoire MEM sera préservé le plus longtemps possible, compte tenu de la capacité nécessairement limitée de l'accumulateur contenu dans le bloc ALIM.

Le clavier de programmation 43 relié au microprocesseur 37 permet de choisir entre un mode lecture et un mode programmation. Un sélecteur 62 permet de sélectionner entre un mode délestage d'une part et un mode effacement lors des périodes de tarif élevé d'autre part. Un voyant respectif 63 s'allume pour signaler le mode choisi.

On notera enfin que la mémoire MEM comprend une mémoire morte renfermant des données immuables de l'appareil, en particulier les programmes d'exploitation de l'adaptateur de puissance. La mémoire MEM renferme d'autre part en mémoire vive les informations suivantes :

- une mémoire par niveau de priorité, dont le contenu est lié a l'adresse du relais qui lui est attribué par l'utilisateur. Un de ses caractères binaires contient la programmation de cette voie en matière de tarif horaire fort et un autre caractérise la coupure dans le même cas ;
- les mémoires d'affichage, nécessaires pour assurer l'affichage permanent ;
- une mémoire de comptage de temps ;
- une mémoire d'effacement, indiquant si l'on est - ou non - en période de tarif élevé ;
- une mémoire de dépassement de consigne ;
- une mémoire état du réseau ;
- une mémoire d'autorisation horaire de rebrancher ;
- une mémoire dite "mémoire lecture/programmation", qui contient le mode de gestion de l'affichage choisi par l'utilisateur, Lecture/Programmation et Effacement/Délestage ;
- une mémoire indiquant un changement de l'affichage.

A l'aide d'organigrammes, on a expliqué en détail dans la demande de brevet français n° 85 10 327 comment s'effectue la gestion des différentes fonctions de l'adaptateur de puissance qui vient d'être décrit.

On va maintenant décrire l'adaptateur de puissance conforme à la présente invention en insistant essentiellement sur les différences de structure qu'il présente par rapport à celui décrit plus haut.

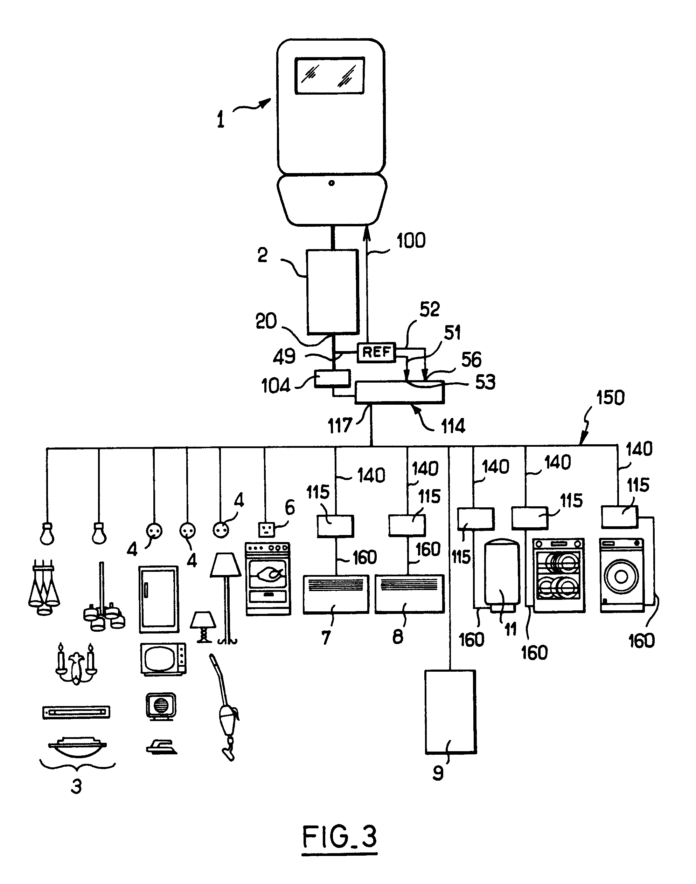

Dans l'exemple choisi (figure 3), cet adaptateur de puissance 114 équipe une installation domestique monophasée identique à celle décrite en référence à la figure 1. Dans ce cas, un filtre 104 est interposé entre la sortie du disjoncteur différentiel 2 et l'entrée de puissance de l'adaptateur 114. Le but de ce filtre 104 est d'atténuer les perturbations pouvant être générées par une installation similaire fonctionnant à proximité d'une façon qui sera explicitée plus loin.

En outre l'adaptateur de puissance 114 ne comporte plus qu'une seule sortie de puissance 117 qui est reliée par l'intermédiaire de lignes d'alimentation 140 formant un réseau de puissance 150 aux différents points de consommation d'électricité 3, 4, 6, 7, 8, 9, 11, de l'installation. Entre chaque point de consommation non prioritaire ou semi-prioritaire, c'est-à-dire dont l'alimentation peut être interrompue (dans l'exemple le chauffage des pièces occupées la nuit, le chauffage d'appoint, le chauffe-eau, le lave-vaisselle et le lave-linge) est interposé un dispositif récepteur 115 qui sera détaillé plus loin.

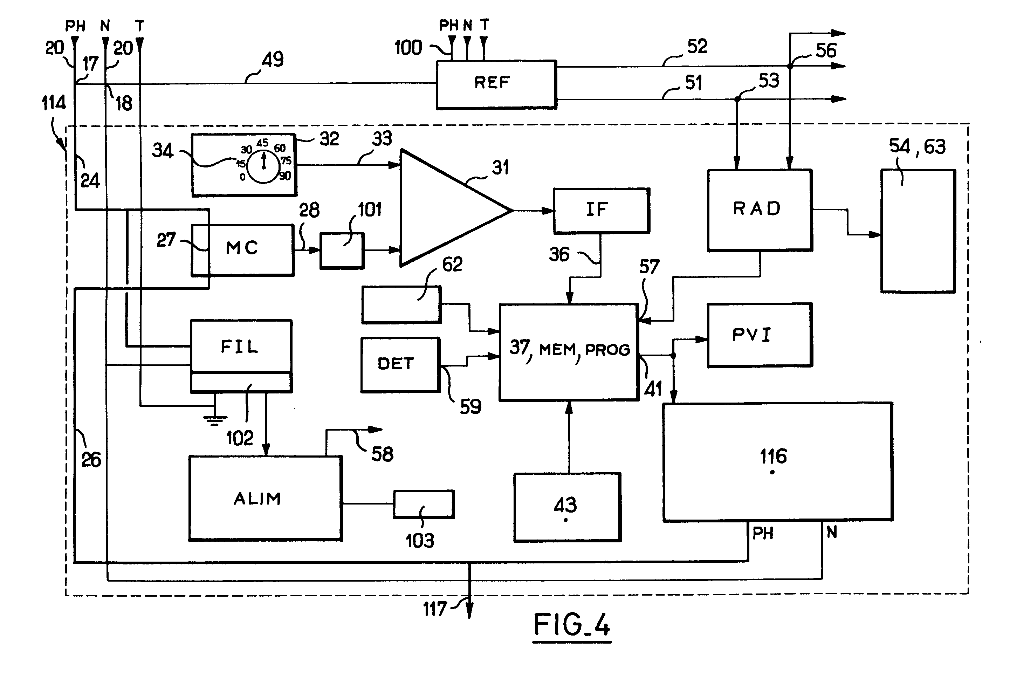

A la figure 4 qui est un schéma bloc de l'adaptateur 114, on voit que par rapport à l'adaptateur 14 de la figure 2, l'interface de commande IC et les relais RA à RE de mise en ou hors service des équipements non prioritaires et semi-prioritaires ont été remplacés par un circuit émetteur 116 qui sert d'interface d'émission entre la sortie 41 des circuits de traitement d'informations 37, MEM, PROG du dispositif délesteur et la sortie de puissance 117 de l'adaptateur 114.

Ce circuit émetteur 116 est adapté à délivrer sur la sortie de puissance 117, des signaux de commande qui se superposent à l'onde de tension délivrée par le secteur et auxquels sont sensibles de manière sélective les dispositifs récepteurs 115.

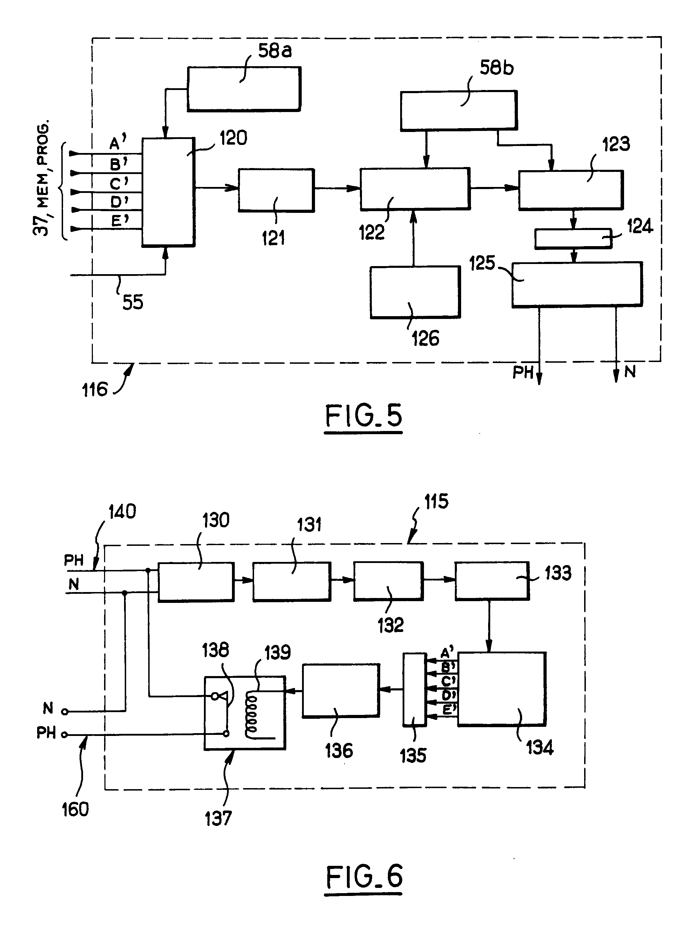

Le circuit émetteur 116 comprend (figure 5) un circuit de codage 120 qui est adapté à transformer l'information de commande des récepteurs 115 émanant sous forme parallèle du microprocesseur 37 en un signal de commande codé binairement comprenant une série d'impulsions ou de bits logiques. De manière plus explicite, le microprocesseur 37 du dispositif délesteur de l'adaptateur délivre 5 signaux logiques parallèles A', B', C', D', E' destinés à commander le débranchement ou le rebranchement des équipements non prioritaires et qui constituent des bits de données. Le circuit de codage 120 transforme ces signaux parallèles en une information série comportant des bits supplémentaires nécessaires à la transmission ainsi que des bits d'adresses qui dans l'exemple ne sont pas utilisés, ces bits étant figés à un même état logique pour l'émetteur 116 et les récepteurs 115. Le message série ainsi constitué comporte l'information de commande des dispositifs récepteurs de l'installation, c'est-à-dire qu'il comporte autant de bits de données qu'il y a de récepteurs de types différents (cinq dans l'exemple), c'est-à-dire de récepteurs sensibles de manière indépendante et sélective à l'un des bits de données du signal série. A titre d'exemple, si on souhaite commander simultanément deux dispositifs récepteurs, il suffit de leur affecter un même bit de données au niveau du signal délivré par le circuit de codage du circuit émetteur.

Par ailleurs, pour que l'ordre ou la commande soit pris en compte, il faut qu'un message reçu soit confirmé par un deuxième message identique au premier, ceci afin d'éviter les commandes intempestives.

L'émission du signal dont la durée est inférieure ou égale a une seconde, est déclenchée par le microprocesseur de l'adaptateur en fonction de la programmation et de l'intensité mesurée par celui-ci, par l'intermédiaire d'une ligne de commande d'émission 55 qui aboutit au circuit de codage 120. L'émission du signal n'est pas continue mais intervient seulement quand un délestage (ou un relestage) est nécessaire et, en parallèle, de manière récurrente une fois toutes les huit minutes pour confirmer ou réactualiser l'état des récepteurs.

Le signal délivré par le circuit du codage 120 transite par un circuit optocoupleur 121 qui assure l'isolation galvanique entre le circuit de codage 120 et les circuits de traitement d'informations 37, MEM, PROG du dispositif délesteur auxquels il est relié d'une part, et la partie puissance du circuit émetteur d'autre part, puis module suivant un mode tout ou rien dans un circuit mélangeur 122, une onde porteuse haute fréquence, de l'ordre de 120 kHz, qui est issue d'un oscillateur 126. Cette onde porteuse haute fréquence autorise ainsi la transmission du signal de commande par l'intermédiaire des conducteurs d'alimentation 140, 160 (figure 3) des points de consommation.

Avant émission sur le réseau de puissance 150 (figure 3), le signal de commande mélangé à l'onde porteuse transite par un circuit adaptateur d'impédance 123 qui permet d''"attaquer" le réseau en basse impédance de façon à rendre la commande des dispositifs récepteurs insensibles aux variations d'impédance du réseau de puissance, puis par un circuit écrêteur 124 qui protège le dispositif délesteur contre un retour vers celui-ci d'impulsions parasites générées par ce réseau, et enfin par un circuit d'isolement 125 qui isole le circuit émetteur 116 du réseau de puissance. En outre deux alimentations distinctes 58a, 58b évitent tout couplage puissance - commande par l'alimentation.

Le signal émis sur le réseau ne perturbe pas le fonctionnement des appareils électroménagers ni des appareils radio compte tenu de la fréquence et de la durée relativement réduites de l'émission et surtout du faible niveau de puissance de l'onde porteuse qui ne dépasse pas 5 mW.

La Demanderesse a également vérifié que la transmission du signal n'était pas affectée par les parasites produits par les appareils électroménagers ni par le fonctionnement des appareils comportant des moteurs avec condensateurs.

Par ailleurs, le filtre 104 placé en amont du dispositif délesteur et accordé sur la fréquence de l'onde porteuse (120 kHz) atténue de 20 dB, à cette fréquence, le retour du signal sur le réseau de distribution et donc toute interférence avec une installation voisine équipée du même système. En pratique, le filtre 104 peut être intégré au boîtier de l'adaptateur 114 mais ce n'est pas indispensable.

A la figure 6 qui est un schéma bloc d'un dispositif récepteur 115, on voit que le signal de commande mélangé à l'onde porteuse 120 kHz et qui a été véhiculé par les conducteurs de puissance 140 transite d'abord par un circuit d'isolement 130 qui isole l'électronique du dispositif récepteur du réseau de puissance et un circuit écrêteur 131 qui supprime les impulsions parasites avant d'être appliqué à un filtre sélectif 132 qui est accordé sur la fréquence de l'onde porteuse, c'est-à-dire dans l'exemple 120 kHz, de manière à éliminer les signaux parasites de fréquence différente de celle de l'onde porteuse susceptible de perturber la transmission du signal de commande. Ce signal de commande est ensuite appliqué a un circuit détecteur de fréquence 133 qui restitue à sa sortie le signal de commande sous forme d'une série d'impulsions, c'est-à-dire sous la forme qu'il présente en sortie du circuit de codage de l'émetteur.

Le signal délivré par le circuit détecteur de fréquence 133 transite alors par un circuit de décodage 134 qui restitue aux bornes de ses cinq sorties respectivement, cinq informations logiques parallèles A', B', C', D', E' qui représentent le signal de commande sous une forme identique à celle qu'il présente en sortie du microprocesseur du dispositif délesteur. Ces cinq informations A', B', C', D', E' sont appliquées à un circuit sélecteur 135 qui affecte l'une d'entre elles à la commande du dispositif récepteur 115 considéré ce qui signifie que seule l'information choisie (A' ou B' ou C' ou D' ou E') sera prise en compte au niveau de ce récepteur. Cette information, après passage dans une interface de puissance 136, est utilisée pour la commande d'un relais 137, la mise sous tension de la bobine 139 de ce relais 137 provoquant par exemple l'ouverture de son contact 138 et par là-même la mise hors tension ou la coupure de la ligne d'alimentation 140, 160 de l'équipement électrique domestique auquel le récepteur 115 est relié.

Chaque dispositif récepteur du type qui vient d'être décrit est alimenté de façon classique par un système (non représenté) à transformateur et circuits redresseur, de filtrage et régulateur.

Tout message reçu par un dispositif récepteur est gardé en mémoire au niveau du circuit de décodage jusqu'à réception d'un nouveau message.

En cas de coupure de l'alimentation secteur, aucune sauvegarde n'est effectuée au niveau des dispositifs récepteurs, ceux-ci revenant alors en position de repos, c'est-à-dire que leur relais est en position fermée et que l'alimentation des équipements correspondants est assurée. Ceci ne constitue pas un inconvénient car l'alimentation du circuit émetteur de l'adaptateur est sauvegardée. En cas de dépassement de l'intensité consommée par l'installation après une coupure secteur, un nouveau message est émis par l'adaptateur de sorte que les dispositifs récepteurs sont à nouveau positionnés correctement.

Chaque dispositif récepteur est contenu dans un boîtier qui comprend un dispositif de branchement adapté à être raccordé aux prises de branchement domestiques classiques, c'est-à-dire prise bipolaire 10 A, prises bipolaires 16 A et 20 A avec borne de terre et dispositif de raccordement des convecteurs. Les dispositifs récepteurs sont donc des dispositifs amovibles que l'usager met en place aisément au gré de ses besoins.

**Revendications**

1. Adaptateur de puissance (114), notamment pour installations électriques domestiques comportant plusieurs points de consommation d'électricité (3, 4, 6-9, 11), comprenant des moyens (MC) de détection de la puissance consommée, et des moyens de coupure sélective (31, 32, IF, 37, PROG, MEM, 116) capables, lorsque la puissance électrique consommée par l'ensemble desdits points dépasse un certain seuil, de couper en cascade selon un ordre préétabli l'alimentation de certains (7, 8, 11) au moins des points de consommation d'électricité jusqu'à ce que le seuil soit respecté, et de rétablir ensuite l'alimentation de ces points dans l'ordre inverse, les moyens de coupure sélective comprenant des moyens (PROG, MEM) de programmation de l'ordre préétabli et un circuit émetteur (116) pour délivrer des signaux de commande auxquels sont sensibles de manière sélective des dispositifs récepteurs (115) pour couper ou rétablir l'alimentation desdits points de consommation électrique, ces dispositifs récepteurs (115) étant reliés en série avec lesdits points et en amont de ceux-ci, caractérisé en ce que l'adaptateur comprend une entrée de puissance (17, 18) et une sortie de puissance (117) reliée aux points de consommation d'électricité (3, 4, 6, 7, 8, 9, 11), et en ce que le circuit émetteur (116) délivre les signaux de commande sur la sortie de puissance (117) de l'adaptateur, les dispositifs récepteurs (115) étant sensibles de manière sélective aux signaux de commande superposés au courant de puissance destiné aux points de consommation.

2. Adaptateur conforme à la revendication 1, caractérisé en ce que les moyens de coupure sélective sont sensibles à un signal extérieur pour couper sélectivement l'alimentation d'au moins un desdits points de consommation en réponse audit signal extérieur indépendamment de l'ordre préétabli précité.

3. Adaptateur conforme à l'une des revendications 1 et 2, caractérisé en ce que l'adaptateur comprend des moyens pour sélectionner par programmation ceux des points de consommation qui doivent être coupés en réponse audit signal extérieur.

4. Adaptateur conforme à l'une des revendications 1 à 3, dans lequel les moyens de coupure comprennent des circuits de traitement d'informations (37, MEM), caractérisé en ce que le circuit émetteur (116) comprend un circuit de codage (120) adapté à transformer une information de commande (A', B', C', D', E') émanant sous forme parallèle des circuits de traitement d'informations (37, MEM) en un signal de commande comprenant une série d'impulsions pour moduler suivant un mode tout ou rien une onde porteuse à haute fréquence adaptée à transiter dans les conducteurs d'alimentation (140, 150, 160) des points de consommation (3, 4, 6, 7, 8, 9, 11).

5. Adaptateur conforme à la revendication 4, caractérisé en ce que le circuit de codage (120) et les circuits de traitement d'informations (37, MEM) auxquels il est relié sont galvaniquement isolés du réseau de puissance (150) d'alimentation des points de consommation (3, 4, 6, 7, 8, 9, 11) par un circuit optocoupleur (121).

6. Adaptateur conforme à l'une des revendications 1 à 5, caractérisé en ce que le circuit émetteur (116) comprend en outre un circuit adaptateur d'impédance (123) pour rendre la commande des dispositifs récepteurs (115) insensible aux variations d'impédance du réseau d'alimentation (150) des points de consommation (3, 4, 6, 7, 8, 9, 11) et un circuit écrêteur (124) pour protéger les moyens de coupure contre un retour vers ceux-ci d'impulsions parasites générées par ce réseau (150).

7. Adaptateur conforme à l'une des revendications 4 à 6, caractérisé en ce que chaque dispositif récepteur (115) comprend en entrée un filtre sélectif (132) accordé sur la fréquence de l'onde porteuse pour éliminer les signaux parasites de fréquence différente de celle de l'onde porteuse et un circuit détecteur de fréquence (133) qui restitue à sa sortie le signal de commande sous forme d'une série d'impulsions.

8. Adaptateur conforme à la revendication 7, caractérisé en ce que le signal délivré par le circuit détecteur de fréquence (133) est appliqué à un circuit de décodage (134) pour restituer à ses bornes de sortie le signal de commande sous forme parallèle identique à celle qu'il présente en sortie des circuits de traitement d'informations (37, MEM) de sorte que chaque dispositif récepteur (115) soit sensible à au moins l'une des informations (A', B', C', D', E') présentes aux bornes de sortie du circuit de décodage (134) pour couper ou rétablir l'alimentation électrique du point de consommation (7, 8, 11) auquel ce dispositif récepteur (115) est relié.

9. Adaptateur conforme à la revendication 8, caractérisé en ce que le circuit de décodage (134) est adapté à mémoriser tout signal reçu par le dispositif récepteur (115) auquel il appartient jusqu'à réception d'un nouveau signal.

10. Adaptateur conforme à l'une des revendications 7 à 9, caractérisé en ce que les circuits (132 à 136) de chaque dispositif récepteur (115) sont isolés galvaniquement du réseau de puissance (150) d'alimentation des points de consommation.

11. Adaptateur conforme à l'une des revendications 1 à 10, caractérisé en ce qu'il comprend en outre un filtre (104) relié en série avec les moyens de coupure sélective et en amont de ceux-ci pour atténuer les perturbations pouvant être générées par une installation similaire fonctionnant au voisinage de cet adaptateur.

**Claims**

1. A power adapter (114), of use inter alia for domestic electrical installations comprising a plurality of electricity consumption points (3, 4, 6-9, 11), comprising means (MC) for detecting the power consumed, and selective cut-out means (31, 32, IF, 37 PROG, MEM, 116) which, when the electrical power consumed by all the said points exceeds a certain threshold, are capable of interrupting the supply in cascade in accordance with a predetermined order, to at least some (7, 8, 11) of the electricity consumption points until said threshold is restored, and then restoring the supply to the said points in the reverse order, the selective cut-out means comprising means (PROG, MEM) for programming the predetermined order and a transmitting circuit (116) for delivering control signals to which receiver facilities (115) are selectively sensitive to interrupt or restore the supply to said electricity consumption points, said receiver facilities (115) being connected in series with and upstream of the consumption points, characterised in that the adapter comprises a power input (17, 18) and a power output (117) connected to the electricity consumption points (3, 4, 6, 7, 8, 9, 11) and in that the transmitting circuit (116) delivers the control signals to the power output (117) of the adapter, the receiver facilities (115) being selectively sensitive to the control signals superimposed on the power current intended for the consumption points.

2. An adapter according to Claim 1, characterised in that the selective cut-out means are sensitive to an external signal in order selectively to interrupt the supply to at least one of said consumption points in response to said external signal independently of the said predetermined order.

3. An adapter according to Claim 1 or 2, characterised in that the adapter comprises means for selecting, by programming, those of the consumption points which are to be cut off in response to the external signal.

4. An adapter according to any one of Claims 1 to 3, in which the cut-off means comprise data processing circuits (37, MEM), characterised in that the transmitting circuit (116) comprises an encoding circuit (120) adapted to convert an item of control information (A', B', C', D', E') output in parallel by the data processing circuits (37, MEM) into a control signal comprising a number of pulses for on/off modulation of a high-frequency carrier wave adapted to be propagated via the supply conductors (140, 150, 160) of the consumption points (3, 4, 6, 7, 8, 9, 11).

5. An adapter according to Claim 4, characterised in that the encoding circuit (120) and the data processing circuits (37, MEM) to which it is connected are galvanically insulated from the power network (150) supplying the consumption points (3, 4, 6, 7, 8, 9, 11) by an opto-coupler circuit (121).

6. An adapter according to any one of Claims 1 to 5, characterised in that the transmitting circuit (116) also comprises an impedance matching circuit (123) to make the control of the receiver facilities (115) insensitive to impedance variations of the network (150) supplying the consumption points (3, 4, 6, 7, 8, 9, 11) and a peak-clipping circuit (124) to protect the cut-out means against a return thereto of interfering pulses generated by said network (150).

7. An adapter according to any one of Claims 4 to 6 characterised in that each receiver facility (115) comprises a selective input filter (132) tuned to the carrier wave frequency to eliminate interfering signals of a frequency differing from the carrier wave frequency and a frequency detector circuit (133) which restores the control signal at its output in the form of a series of pulses.

8. An adapter according to Claim 7, characterised in that the signal output by the frequency detector circuit (133) is applied to a decoding circuit (134) to restore the control signal at its output terminals in a parallel form identical to the form it has when output by the data processing circuits (37, MEM) so that each receiver facility (115) is sensitive to at least one of the data items (A', B', C', D', E') present at the output terminals of the decoding circuit (134) to interrupt or restore the electrical supply to the consumption point (7, 8, 11) to which such receiver facility (115) is connected.

9. An adapter according to Claim 8, characterised in that the decoding circuit (134) is adapted to store any signal received by the receiver facility (115) to which it belongs until reception of a further signal.

10. An adapted according to any one of Claims 7 to 9, characterised in that the circuits (132 - 136) of each receiver facility (115) are galvanically insulated from the power network (150) supplying the consumption points.

11. An adapter according to any one of claims 1 to 10, characterised in that it also comprises a filter (104) connected in series with and upstream of the selective cut-out means in order to damp possible disturbances caused by a similar installation operating near the adapter.

**Patentansprüche**

1. Leistungsadapter (114), insbesondere für elektrische Haushaltsanlagen, die mehrere Stromverbraucherpunkte (3, 4, 6 - 9, 11) enthalten, mit Mitteln (MC) zur Erfassung der verbrauchten Leistung und Mitteln zum selektiven Abschalten (31, 32, IF, 37, PROG, MEM, 116), die im Stande sind, wenn die von der Gesamtheit dieser Punkte verbrauchte Leistung einen bestimmten Schwellwert überschreitet, in Kaskade nach einer vorbestimmten Reihenfolge die Versorgung von wenigstens bestimmten (7, 8, 11) Stromverbraucherpunkten abzuschalten, bis der Schwellwert eingehalten wird, und anschließend die Versorgung dieser Punkte in der umgekehrten Reihenfolge wiederherzustellen, wobei die Mittel zum selektiven Abschalten Mittel (PROG; MEM) zur Programmierung der vorbestimmten Reihenfolge und eine Sendeschaltung (116) umfassen, um Steuersignale abzugeben, fur die Empfängervorrichtungen (115) selektiv empfindlich sind, um die Versorgung der genannten Stromverbraucherpunkte abzuschalten oder wiederherzustellen, wobei diese Empfängervorrichtungen (115) mit den genannten Punkten in Reihe geschaltet sind und vor diesen liegen, dadurch gekennzeichnet, daß der Adapter einen Leistungseingang (17, 18) und einen Leistungsausgang (117) aufweist, die mit den Stromverbraucherpunkten (3, 4, 6, 7, 8, 9, 11) verbunden sind, und daß die Sendeschaltung (116) Steuersignale am Leistungsausgang (111) des Adapters abgibt, wobei die Empfängervorrichtungen (115) selektiv für die Steuersignale empfindlich sind, welche dem Leistungsstrom für die Verbraucherpunkte uberlagert sind.

2. Adapter nach Anspruch 1, dadurch gekennzeichnet, daß die Mittel zun selektiven Abschalten für ein externes Signal empfindlich sind, um selektiv die Versorgung wenigstens eines der Verbraucherpunkte ansprechend auf dieses externe Signal unabhängig von der vorbestimmten Reihenfolge abzuschalten.

3. Adapter nach Anspruch 1 oder 2, dadurch gekennzeichnet, daß der Adapter Mittel umfaßt, um durch Programmierung diejenigen Verbraucherpunkte auszuwählen, die ansprechend auf das externe Signal abgeschaltet werden sollen.

**4.** Adapter nach einem der Ansprüche 1 bis 3, bei welchem die Abschaltmittel Informationsverarbeitungsschaltungen (37, MEM) umfassen, dadurch gekennzeichnet, daß die Sendeschaltung (116) eine Kodierschaltung (120) umfaßt, die ausgelegt ist, um eine Steuerinformation (A', B', C', D', E'), die in paralleler Form von den Informationsverarbeitungsschaltungen (37, MEM) ausgeht, in ein Steuersignal umzusetzen, das eine Reihe von Impulsen enthält, um eine hochfrequente Trägerschwingung, die geeignet ist, um sich über die Versorgungsleiter (140, 150, 160) der Verbraucherpunkte (3, 4, 6, 7, 8, 9, 11) auszubreiten, einer 100 %-Modulation zu unterziehen.

**5.** Adapter nach Anspruch 4, dadurch gekennzeichnet, daß die Kodierschaltung (120) und die Informationsverarbeitungsschaltungen (37, MEM), woran sie angeschlossen ist, galvanisch von dem Leistungs-Versorgungsnetz (150) der Verbraucherpunkte (3, 4, 6, 7, 8, 9, 11) durch eine Optokoppler-Schaltung (121) entkoppelt sind.

**6.** Adapter nach einem der Ansprüche 1 bis 5, dadurch gekennzeichnet, daß die Sendeschaltung (116) ferner eine Impedanz-Adapterschaltung (123) umfaßt, um die Steuerung der Empfängervorrichtungen (115) gegenüber Impedanzänderungen des Versorgungsnetzes (150) für die Verbraucherpunkte (3, 4, 6, 7, 8, 9, 11) unempfindlich zu machen, sowie eine Begrenzungsschaltung (124), um die Abschaltmittel gegen zu ihnen zurückfließende Störimpulse zu schützen, die durch das Netz (150) erzeugt werden.

**7.** Adapter nach einem der Ansprüche 4 bis 6, dadurch gekennzeichnet, daß jede Empfängervorrichtung (115) eingangsseitig ein selektives Filter (132), das auf die Frequenz der Trägerschwingung abgestimmt ist, um Störsignale zu eliminieren, deren Frequenz von der der Trägerschwingung verschieden ist, und eine Frequenz-Detektorschaltung (133) umfaßt, die an ihrem Ausgang das Steuersignal in Form einer Reihe von Impulsen wiederherstellt.

**8.** Adapter nach Anspruch 7, dadurch gekennzeichnet, daß das von der Frequenz-Detektorschaltung (133) abgegebene Signal an eine Dekodierschaltung (134) angelegt ist, um an ihren Ausgangsanschlüssen das Steuersignal in einer parallelen Form abzugeben, die mit der übereinstimmt, die es am Ausgang der Informationsverarbeitungsschaltungen (37, MEM) aufweist, so daß jede Empfängerschaltung (115) für wenigstens eine der Informationen (A', B', C', D', E') empfindlich ist, die an den Ausgangsanschlüssen der Dekodierschaltung (134) vorhanden sind, um die Stromversorgung des Verbraucherpunktes (7, 8, 11) abzuschalten oder wiederherzustellen, woran diese Empfängervorrichtung (115) angeschlossen ist.

**9.** Adapter nach Anspruch 8, dadurch gekennzeichnet, daß die Dekodierschaltung (134) ausgelegt ist, um jegliches durch die Empfängervorrichtung (115), wozu sie gehört, empfangene Signal bis zum Empfang eines neuen Signals zu speichern.

**10.** Adapter nach einem der Ansprüche 7 bis 9, dadurch gekennzeichnet, daß die Schaltungen (132 bis 136) jeder Empfängervorrichtung (115) galvanisch von dem Versorgungsnetz (150) für die Verbraucherpunkte getrennt sind.

**11.** Adapter nach einem der Ansprüche 1 bis 10, dadurch gekennzeichnet, daß er ferner ein Filter (104) umfaßt, das in Reihe mit den Mitteln zum selektiven Abschalten und vor diesen eingefügt ist, um Störungen zu bedämpfen, die durch eine ähnliche Anlage erzeugt werden können, die in der Nahe dieses Adapters in Betrieb ist.

FIG.1

FIG.2

EP 0 250 320 B1

FIG.3

EP 0 250 320 B1

PH  N  T

20  17  20

49

PH N T

100

REF

52

56

51  53

114

24

34

30 45 60
15      75
0        90

32  33

31

IF

RAD

54, 63

27  MC

28  101

36

57

62

37, MEM, PROG

PVI

FIL

102

DET

59

41

26

58

116

ALIM

43

PH    N

103

117

**FIG. 4**

FIG.5

FIG.6

15